# EUROPÄISCHE PATENTANMELDUNG

(11) **EP 4 066 620 A1**
(43) Veröffentlichungstag der Anmeldung: **05.10.2022**
(21) Anmeldenummer: 22161074.4
(22) Anmeldetag: 09.03.2022
(51) Int. Cl.: A01D 41/14, A01D 57/20, A01D 75/28

(54) **SCHNEIDWERK FÜR EINE ERNTEMASCHINE MIT AN DEN BODEN ANPASSBARER FÖRDERBANDEINHEIT**

(30) Priorität: 31.03.2021 DE 102021108173
(71) Anmelder: Zürn Harvesting GmbH & Co. KG, 74214 Schöntal-Westernhausen (DE)
(72) Erfinder: STAHL, Martin, 97944 Boxberg Schwabhausen (DE); ZÜRN, Rolf, 74214 Schöntal (DE)
(74) Vertreter: Manitz Finsterwald Patent- und Rechtsanwaltspartnerschaft mbB

(57) **Zusammenfassung**

Die vorliegende Erfindung betrifft ein Schneidwerk (11) für eine Erntemaschine mit einer Schneidmesseranordnung (17) zum Mähen eines Ernteguts und zumindest einer Förderbandeinheit (50), die das gemähte Erntegut aufnimmt und von der Schneidmesseranordnung zu einer Fördereinrichtung fördert, die das Erntegut weiter fördert, um dieses einer Verarbeitungseinrichtung, insbesondere einem Dreschwerk, zuzuführen. Die Förderbandeinheit umfasst eine Antriebsrolle (54), eine Umlenkrolle (55) und ein von der Antriebsrolle angetriebenes Förderband (56), das zwischen der Antriebsrolle und der Umlenkrolle umläuft und diese Rollen umgibt. Die Umlenkrolle umfasst mehrere in axialer Richtung der Umlenkrolle voneinander beabstandete Umlenkwalzen (57), die zur Anpassung der Förderbandeinheit an Bodenunebenheiten unabhängig voneinander mittels Schwingen (64) gelagert sind.

## Beschreibung

Die vorliegende Erfindung betrifft ein Schneidwerk für eine Erntemaschine wie beispielsweise einen Mähdrescher mit einer Schneidmesseranordnung zum Mähen eines Ernteguts und einer Förderbandeinheit, die das gemähte Erntegut aufnimmt und von der Schneidmesseranordnung zu einer Fördereinrichtung transportiert, welche das Erntegut weiterfördert, um dieses einer Verarbeitungseinrichtung der Erntemaschine, insbesondere einem Dreschwerk, zuzuführen.

Ein derartiges Schneidwerk geht der Art nach im Wesentlichen beispielsweise aus der DE 10 2013 214 596 A1 hervor.

Mittels der Förderbandeinheit derartiger Schneidwerke kann das gemähte Erntegut, beispielweise Weizen, Gerste, Soja oder Raps, der Fördereinrichtung in Form einer Einzugsschnecke gezielt zugeführt werden. Insbesondere kann durch den aktiven Abtransport des Ernteguts von der Schneidmesseranordnung auch kurzes Material der Fördereinrichtung zuverlässig zugeführt werden. Der aktive Ernteguttransport mittels der Förderbandeinheit sorgt dabei insbesondere für eine gleichmäßige bzw. kontinuierliche Beschickung der Dreschorgane. Im Ergebnis führt dies nicht nur zu geringerer Belastung der Antriebe durch Drehmomentspitzen und somit zu weniger Verschleiß, sondern auch zu einer optimalen Auslastung des Mähdreschers.

Herkömmliche Förderbandeinheiten weisen eine angetriebene Antriebsrolle nahe der Einzugsschnecke und eine nahe der Schneidmesseranordnung angeordnete Umlenkrolle auf, die sich in Ernterichtung vor der Antriebsrolle befindet, wobei zwischen der Antriebsrolle und der Umlenkrolle ein diese beiden Rollen umgebendes Förderband umläuft. Frisch gemähtes Erntegut fällt somit mit der Ähre voraus auf das Förderband, welches das Erntegut zur weiteren Verarbeitung und Förderung der Einzugsschnecke zuführt.

In jüngster Zeit sind Schneidmesseranordnungen bekannt geworden, die sich quer zur Ernte- bzw. Fahrtrichtung der Erntemaschine erstrecken und die derart flexibel ausgestaltet sind, dass sie sich an etwaige Bodenunebenheiten anpassen können. Dies kann jedoch dazu führen, dass zwischen der Schneidmesseranordnung und der Förderbandeinheit, insbesondere deren Umlenkrolle, die das gemähte Erntegut aufnimmt und von der Schneidmesseranordnung zu einer Fördereinrichtung fördert, ein Spalt entsteht, durch den frisch gemähtes Erntegut in unerwünschter Weise verlorengehen kann. Anstelle auf die Förderbandeinheit zu fallen, kann frisch gemähtes Erntegut durch die in Rede stehenden Schlitze hindurch auf den Boden fallen, was die Ausbeute und damit die Ernteleistung der Erntemaschine in unerwünschter Weise herabsetzt.

Der Erfindung liegt daher die Aufgabe zugrunde, ein Schneidwerk für eine Erntemaschine anzugeben, mit dem sich die Ernteleistung der Erntemaschine optimieren lässt.

Diese Aufgabe wird mit einem Schneidwerk mit den Merkmalen des Anspruchs 1 und insbesondere dadurch gelöst, dass die Umlenkrolle mehrere in axialer Richtung der Umlenkrolle voneinander beabstandete bzw. zueinander benachbarte Umlenkwalzen umfasst, die zur Anpassung der Förderbandeinheit, insbesondere der Umlenkrolle, an Bodenunebenheiten unabhängig voneinander beweglich gelagert sind.

Erfindungsgemäß ist es also gewissermaßen vorgesehen, dass die Umlenkrolle, die sich in Ernterichtung vor der Antriebsrolle befindet und das Förderband nahe der Schneidmesseranordnung umlenkt, in mehrere Umlenkrollensegmente in Form von Umlenkwalzen aufgelöst bzw. unterteilt ist, wobei sich das Förderband quer zur Ernterichtung über mehrere dieser Umlenkwalzen hinweg erstreckt. Anders als eine einstückige, durchgehende Umlenkrolle kann sich die erfindungsgemäße Umlenkrolle, die durch mehrere quer zur Ernterichtung zueinander benachbarte Umlenkwalzen gebildet wird, somit in sich verformen und wie die vorauseilende Schneidmesseranordnung etwaigen Bodenunebenheiten anpassen. Die Förderbandeinheit und insbesondere deren Umlenkrolle kann sich somit wie die Schneidmesseranordnung etwaigen Bodenunebenheiten anpassen, so dass zwischen der Schneidmesseranordnung und der Förderbandeinheit keine unerwünschten Spalte entstehen können, durch die frisch gemähtes Erntegut verlorengehen kann.

Im Folgenden wird nun auf bevorzugte Ausführungsformen der Erfindung eingegangen, wobei sich weitere Ausführungsformen auch aus den abhängigen Ansprüchen, der Figurenbeschreibung sowie den Zeichnungen selbst ergeben können.

So kann es gemäß einer Ausführungsform vorgesehen sein, dass einer jeden Umlenkwalze eine jeweilige Schwinge zugeordnet ist, die an einer die Antriebsrolle antreibenden Antriebswelle schwenkbar bzw. drehbar um die Wellenachse der Antriebswelle gelagert ist und die ihrerseits an ihrem freien, der Antriebswelle gegenüberliegenden Ende die ihr zugeordnete Umlenkwalze trägt und drehbar lagert, so dass jede Umlenkwalze mittels der ihr zugeordneten Schwinge schwenkbar an der Antriebswelle gelagert ist. Jede Umlenkwalze kann somit im Wesentlichen unabhängig von den anderen Umlenkwalzen bezüglich der Antriebswelle verschwenkt werden. Trifft somit beispielsweise eine Umlenkwalze in Ernterichtung auf eine lokal begrenzte Bodenerhebung, so wird primär diese Umlenkwalze nach oben ausgelenkt. Aufgrund der Tatsache jedoch, dass sich das Förderband in Querrichtung über mehrere Umlenkwalzen hinweg erstreckt, wird die Auslenkung der in Rede stehenden Umlenkwalze über das Förderband zum Teil auch auf benachbarte Umlenkwalzen übertragen, so dass sich die Förderbandeinheit und insbesondere die Umlenkrolle aufgrund lokal begrenzter Bodenunebenheiten in sich verformen kann, und zwar so, dass sie einer entsprechenden Verformung der Schneidmesseranordnung folgt.

Gemäß einer weiteren Ausführungsform kann es vorgesehen sein, dass jede Schwinge längenveränderlich ausgebildet ist. Insbesondere kann es dabei vorgesehen sein, dass jede Schwinge einen teleskopierbaren Abschnitt umfasst, der eine Längenänderung der Schwinge ermöglicht. Durch eine derartige längenveränderliche Ausbildung der Schwingen kann eine gegebenenfalls mit der Zeit auftretende Längung des Förderbands, das beispielsweise aus PVC oder Gummi bestehen kann, kompensiert werden. Tritt beispielsweise mit der Zeit eine Längung des Förderbands auf, so kann diese Längung beispielsweise kompensiert werden, indem ein Mechaniker in entsprechender Weise die Länge der Schwingen manuell anpasst. Auf diese Art und Weise kann das Förderband stets auf Spannung gehalten werden.

Gemäß einer weiteren Ausführungsform kann es vorgesehen sein, dass jede Schwinge zwei Gabeln umfasst, wobei jede dieser Gabeln wie die Vorderradgabel eines Fahrrads jeweils einen Gabelschaft und zwei parallel zueinander verlaufende Arme umfasst. Hierbei kann der Gabelschaft der einen Gabel den Gabelschaft der anderen Gabel teleskopartig aufnehmen oder umgekehrt, wobei die freien Enden der Arme der einen Gabel an der Antriebswelle angelenkt sind und zwischen den Armen der anderen Gabel jeweils eine Umlenkwalze angeordnet ist, die an den freien Enden der Arme der anderen Gabel drehbar gelagert ist. Die einzelnen Umlenkwalzen können somit unabhängig voneinander um die Antriebswelle der Förderbandeinheit verschwenkt werden.

Um die einzelnen Gabeln an der Antriebswelle anlenken zu können, ohne dass dabei die einzelnen Gabeln miteinander kollidieren, kann es gemäß einer weiteren Ausführungsform vorgesehen sein, dass die Antriebsrolle mehrere in axialer Richtung der Antriebsrolle voneinander beabstandete bzw. zueinander benachbarte Antriebswalzen umfasst, wobei zwischen den Armen der einen Gabel jeder Schwinge jeweils eine Antriebswalze angeordnet ist. Wie die Umlenkrolle ist somit auch die Antriebsrolle in mehrere Walzen bzw. in mehrere Antriebsrollensegmente aufgelöst bzw. unterteilt. Die Antriebswalzen sind dabei formschlüssig auf einer durchgehenden Antriebswelle angeordnet, wodurch eine starre Verbindung zwischen den einzelnen Antriebswalzen gegeben ist. Anders als die Umlenkrolle kann sich somit die Antriebsrolle nicht in sich verformen.

Gemäß einer weiteren Ausführungsform kann es vorgesehen sein, dass der Gabelschaft der einen Gabel den Gabelschaft der anderen Gabel drehbar aufnimmt oder umgekehrt. Die Umlenkwalzen können sich somit um eine in Längsrichtung der Gabelschäfte erstreckende Achse drehen, so dass sie sich kontinuierlich an das Förderband anpassen können. Kommt es also zu einer Auslenkung einer Umlenkwalze aufgrund einer lokal begrenzten Bodenunebenheit, so können sich benachbarte Umlenkwalzen entsprechend schrägstellen und sich somit dem beispielsweise glockenkurvenförmigem Verlauf des Förderband quer zur Ernterichtung anpassen. Auf diese Art und Weise wird eine unerwünschte Stufenbildung in Querrichtung des Förderbands verhindert, wodurch die Lebensdauer des Förderbands erhöht werden kann.

Gemäß einer weiteren Ausführungsform kann es vorgesehen sein, dass die beiden Gabeln jeder Schwinge auf Druck gegeneinander vorgespannt sind. Insbesondere kann es dabei vorgesehen sein, dass eine jede Schwinge einen die Gabelschäfte der Gabeln umgebende Schraubendruckfeder umfasst, die sich an der Gabelbrücke der jeweiligen Gabel abstützt. Als Gabelbrücke wird dabei wie bei der Vorderradgabel eines Fahrrads jener Bereich bezeichnet, an dem die Arme zusammentreffen und mit dem Gabelschaft verbunden sind. Kommt es also zu einer Längung des Förderbands während des Betriebs des Schneidwerks bzw. dessen Förderbandeinheit, so kann eine derartige Längung kontinuierlich während des Betriebs kompensiert werden, da durch die auf Druck gegeneinander vorgespannten Gabeln das Förderband stets auf Spannung gehalten wird.

Um einer Überbeanspruchung des Förderbands aufgrund einer punktuellen Auslenkung desselben entgegenzuwirken, kann es gemäß einer weiteren Ausführungsform vorgesehen sein, dass die Förderbandeinheit über eine Winkelbegrenzung verfügt, die die maximale Auslenkung einer Schwinge gegenüber einer benachbarten Schwinge begrenzt. Vorzugsweise kann es dabei vorgesehen sein, dass die Winkelbegrenzung zwischen unmittelbar benachbarten Armen unmittelbar benachbarter Gabeln wirksam ist. Geht man nämlich davon aus, dass erfindungsgemäß jede Umlenkwalze um maximal etwa 10 cm nach oben und unten geschwenkt werden kann, so fluchten benachbarte Arme benachbarter an der Antriebswelle angelenkter Gabeln selbst bei einer Maximalauslenkung benachbarter Gabeln noch teilweise miteinander, so dass durch einen einfachen Anschlag, der zwischen benachbarten Armen benachbarter Gabeln wirksam ist, die relative Auslenkung benachbarter Schwingen zueinander auf einen Maximalwert von etwa +/-10 cm begrenzt werden kann.

Gemäß einer weiteren Ausführungsform kann es vorgesehen sein, dass das Förderband den Abstand zwischen benachbarten Umlenkwalzen überbrückt. Wie bereits erwähnt, läuft also ein einziges Förderband über zumindest zwei, vorzugsweise über vier Umlenkwalzen um. Mehrere derartige Förderbandmodule können somit quer zur Ernterichtung aneinandergereiht werden, so dass sich die so gebildete Förderbandeinheit über die gesamte Arbeitsbreite des Schneidwerks erstreckt.

Um etwaige Bodenunebenheiten durch die Förderbandeinheit ausgleichen zu können, kann an der Schneidmesseranordnung gemäß einer weiteren Ausführungsform eine Mitnehmereinrichtung vorgesehen sein, die eine etwaige Auslenkung der Schneidmesseranordnung auf die Umlenkrolle der Förderbandeinheit überträgt. Hierbei kann es insbesondere vorgesehen sein, dass die Mitnehmereinrichtung einen elastisch verformbaren Führungskanal aufweist, der die Umlenkrolle zumindest zum Teil aufnimmt. Wird somit die Schneidmesseranordnung durch eine lokal begrenzte Bodenunebenheit verformt bzw. ausgelenkt, so erfährt der Führungskanal aufgrund seiner elastischen Ausbildung eine entsprechende Auslenkung, wobei diese Auslenkung aufgrund der Tatsache, dass die Umlenkrolle zumindest zum Teil von dem Führungskanal aufgenommen wird, von demselben auf die Umlenkrolle der Förderbandeinheit übertragen wird. Mit anderen Worten ist also die Umlenkrolle der Förderbandeinheit über die Mitnehmereinrichtung derart mit der Schneidmesseranordnung gekoppelt, dass etwaige Auslenkungen der Schneidmesseranordnung in entsprechender Weise auf die Umlenkrolle der Förderbandeinheit übertragen werden.

Beispielsweise kann der Führungskanal zwei sich quer zur Ernterichtung erstreckende Führungswände aufweisen, zwischen denen die Umlenkrolle platziert ist, wobei entlang eines freien Rands der jeweiligen Führungswand mehrere voneinander beanstandete Aussparungen in der jeweiligen Führungswand ausgebildet sind. Durch die in Rede stehenden Aussparungen wird nicht nur die Flexibilität des Führungskanals quer zur Ernterichtung verbessert; vielmehr wird durch derartige Aussparungen auch ermöglicht, dass Förderrippen, die auf dem Förderband quer zur Förderrichtung beabstandet zueinander vorgesehen sind, in den Führungskanal einlaufen können, ohne dabei mit den Führungswänden zu kollidieren. Der Abstand zwischen den Führungswänden bzw. den zwischen den einzelnen Aussparungen liegenden Führungszähnen der Führungswände und der Umlenkrolle kann somit kleingehalten werden, ohne dass es zu einer Kollision zwischen den Förderrippen und den Führungswänden kommt. Etwaige Bodenunebenheiten können somit verhältnismäßig genau auf die Umlenkrolle übertragen werden, so dass sich diese wie die Schneidmesseranordnung etwaigen Bodenunebenheiten anpassen kann.

Durch die in Rede stehenden Aussparungen kann jedoch nicht nur die Flexibilität des Führungskanals verbessert, sondern auch für eine gute Führung des jeweiligen Förderbands gesorgt werden kann, da die an der Oberfläche des Förderbands quer zur Ernterichtung zueinander beabstandeten Förderrippen durch diese Aussparungen geführt werden, wenn sie in den Führungskanal einlaufen.

Im Folgenden wird die Erfindung nun rein exemplarisch unter Bezugnahme auf die Zeichnungen beschrieben, in denen:
- Fig. 1: eine schematische Darstellung eines erfindungsgemäßen Förderbandmoduls bzw. eines Ausschnitts einer erfindungs-gemäßen Förderbandeinheit in Draufsicht zeigt;
- Fig. 2: einen Querschnitt durch die Förderbandeinheit der Fig. 1 im Bereich einer Schwinge zeigt;
- Fig. 3: eine beispielhafte Ausgestaltung einer Walze in Ansicht und im Querschnitt zeigt;
- Fig. 4: eine Draufsicht auf eine erfindungsgemäße Förderbandein-heit mit mehreren aneinandergereihten Förderbandmodulen zeigt;
- Fig. 5: einen Querschnitt durch ein erfindungsgemäßes Schneidwerk zeigt;
- Fig. 6: eine vergrößerte Darstellung der Fig. 5 im Bereich der Schneidmesseranordnung und der Umlenkrolle zeigt; und
- Fig. 7: eine vereinfachte, teilweise geschnittene Seitenansicht eines herkömmlichen Schneidwerks zeigt.

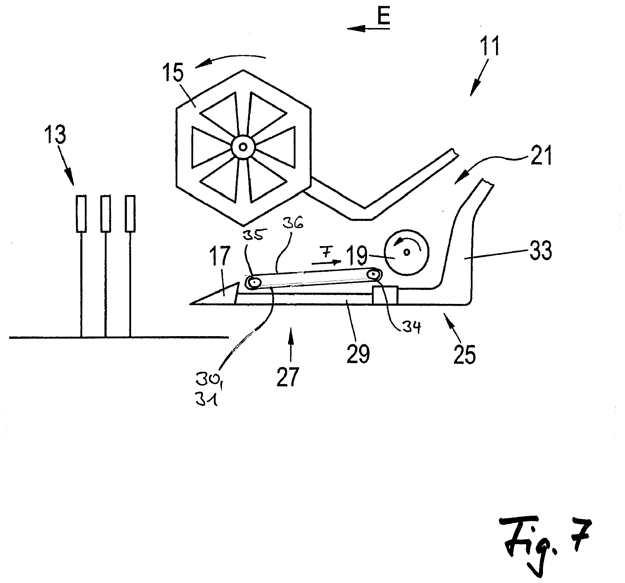

Zunächst werden unter Bezugnahme auf die Fig. 7 der grundsätzliche Aufbau sowie die Funktionsweise eines Schneidwerks 11 für eine hier nicht gezeigte Erntemaschine wie beispielsweise einen Mähdrescher erläutert, welcher dazu dient, Erntegut in Form von Nutzpflanzen 13 wie beispielsweise Roggen, Weizen, Gerste, Soja oder Raps entlang einer Ernterichtung E zu mähen und nachfolgend einem Dreschvorgang zu unterziehen. Das Schneidwerk 11 umfasst hierzu in an sich bekannter Weise eine drehbar angetriebene Haspel 15 sowie eine unterhalb der Haspel 15 angeordnete Schneidmesseranordnung 17 in Form eines sich quer zu der Ernterichtung E erstreckenden Messer- oder Mähbalkens 17. Hinter dem Mähbalken 17 ist eine sich quer zu der Ernterichtung E erstreckende Einzugsschnecke 17 angeordnet, welche dazu dient, die gemähten Nutzpflanzen 13 weiter in einen Einzugsschacht 21 zu fördern.

Wie der Darstellung der Fig. 7 ferner entnommen werden kann, umfasst das Schneidwerk 11 einen Schneidwerksrahmen 25, an welchem der Mähbalken 17 mittels einer Tragstruktur 27 in Form von mehreren parallel verlaufenden Tragarmen 29 gehalten ist, welche rückseitig an einer zu dem Schneidwerksrahmen 25 gehörenden Schneidwerksrückwand 33 angebracht sind.

Um insbesondere auch weniger hoch gewachsenes Erntegut 13 zuverlässig der Einzugsschnecke 19 zuführen zu können, erstreckt sich zwischen der Schneidmesseranordnung 17 und der Einzugsschnecke 17 eine Förderbandeinheit 30, mittels derer das frisch gemähte Erntegut 13 bis zu der Einzugsschnecke 19 transportiert werden kann, um so für eine gleichmäßige Beschickung der Dreschorgane und eine gute Auslastung des Mähdreschers zu sorgen.

Die Förderbandeinheit 30 setzt sich aus mehreren Förderbandmodulen 31 zusammen, welche quer zur Ernterichtung E aneinandergereiht und antriebswirksam miteinander gekoppelt sind. Jedes dieser Förderbandmodule 31 weist dabei eine angetriebene Antriebsrolle 34 nahe der Einzugsschnecke 19, eine nahe der Schneidmesseranordnung 17 befindliche Umlenkrolle 35 sowie ein von der Antriebsrolle 34 angetriebenes Förderband 36 auf, das zwischen der Antriebsrolle 34 und der Umlenkrolle 35 umläuft, um Erntegut 13 in Richtung des Förderpfeils F von der Schneidmesseranordnung 17 zu der Einzugsschnecke 19 zu transportieren.

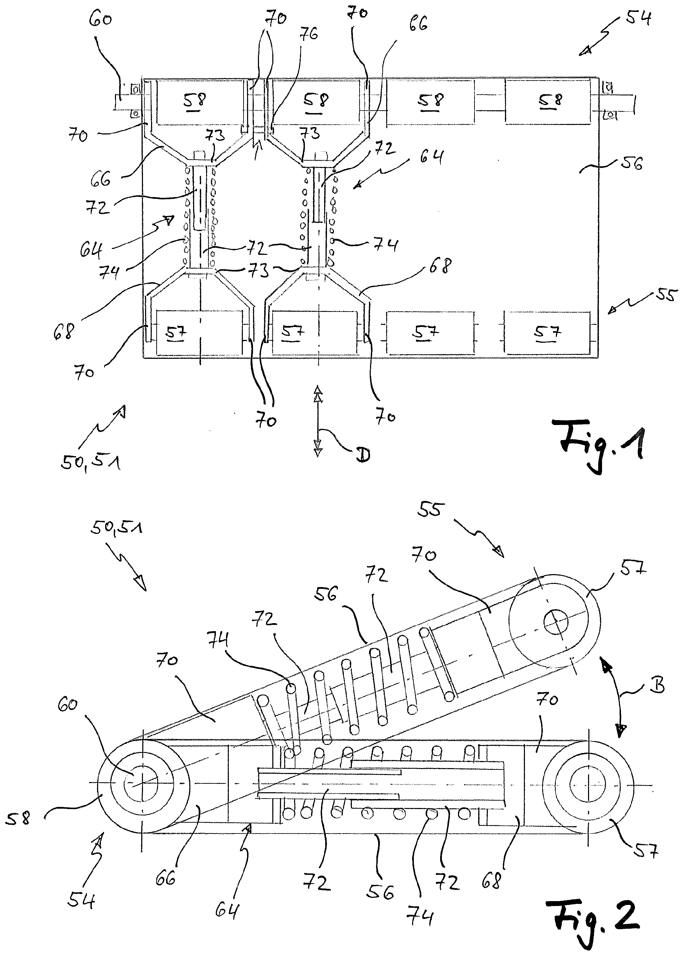

Im Folgenden wird nun unter Bezugnahme auf die Fig. 1 und 2 eine erfindungsgemäße Förderbandeinheit 50 beschrieben, welche erfindungsgemäß flexibel ausgebildet ist, um sich beispielsweise lokal begrenzten Bodenunebenheiten besser anpassen zu können, wie dies insbesondere dann wünschenswert sein kann, wenn sich auch die Schneidmesseranordnung 17 derartigen Bodenunebenheiten anpassen kann.

Auch die erfindungsgemäße Förderbandeinheit 50 umfasst ein Förderband 56, welches zwischen einer angetriebenen Antriebsrolle 54 und einer Umlenkrolle 55 kontinuierlich umläuft und diese Rollen 54, 55 umgibt. Anders als bei herkömmlichen Förderbandeinheiten 30 setzt sich jedoch bei der erfindungsgemäßen Förderbandeinheit 50 die Umlenkrolle 55 aus mehreren in axialer Richtung der Umlenkrolle 54 bzw. quer zur Ernterichtung E voneinander beabstandeten bzw. zueinander benachbarten Umlenkwalzen 57 zusammen, was bedeutet, dass die Umlenkrolle 55 in mehrere Umlenkrollensegmente in Form der in Rede stehenden Umlenkwalzen 57 unterteilt ist. In entsprechender Weise setzt sich bei der hier dargestellten Ausführungsform auch die Antriebsrolle 54 aus mehreren in axialer Richtung der Antriebsrolle 54 bzw. quer zur Ernterichtung E voneinander beabstandeten bzw. zueinander benachbarten Antriebswalzen 58 zusammen, was bedeutet, dass auch die Antriebsrolle 54 in mehrere Antriebsrollensegmente in Form der in Rede stehenden Antriebswalzen 58 unterteilt ist.

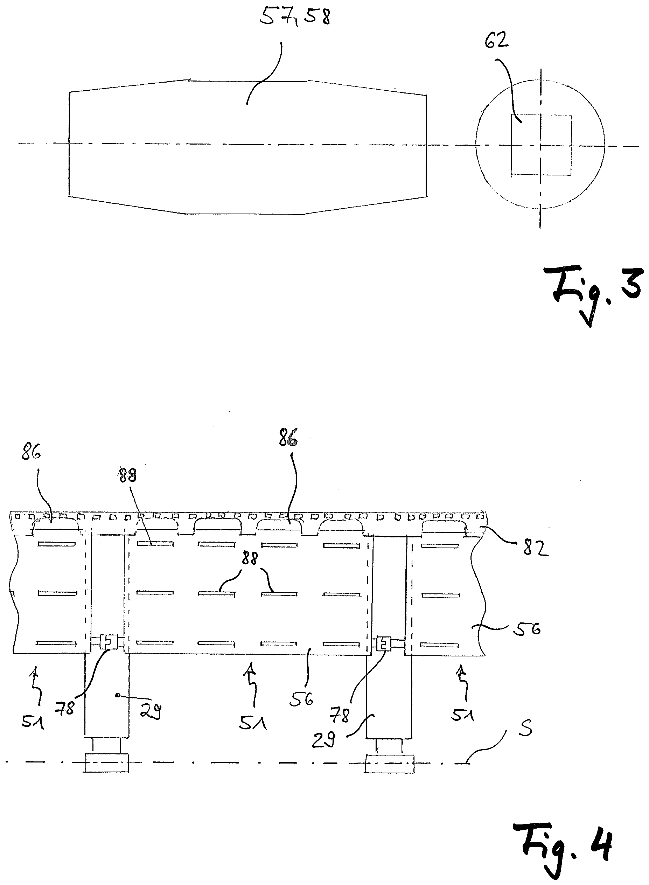

Die einzelnen Antriebswalzen 58 werden dabei von einer durchgehenden Antriebswelle 60 angetrieben, auf der die Antriebswalzen 58 der Reihe nach beabstandet zueinander angeordnet sind. Die Antriebswalzen 58 können dabei formschlüssig mit der Antriebswelle 60 verbunden sein, wodurch die Drehung der Antriebswelle 60 auf die einzelnen Antriebswalzen 58 übertragen wird. Beispielsweise können die Antriebswalzen 58 gemäß der rechten Darstellung der Fig. 3 eine im Querschnitt quadratische Durchgangsöffnung 62 aufweisen, um entsprechende im Querschnitt quadratische Abschnitte der ansonsten zylindrischen Antriebswelle 60 formschlüssig aufnehmen zu können.

Im Unterschied zu den Antriebswalzen 58 sind die Umlenkwalzen 57 nicht untereinander über eine durchgehende Welle verbunden; vielmehr sind die einzelnen Umlenkwalzen 57 unabhängig voneinander an der Antriebswelle 60 gelagert, so dass sie sich zur Anpassung an lokal begrenzte Bodenunebenheiten unabhängig voneinander bewegen können.

Genauer ist jede Umlenkwalze 57 mittels einer Schwinge 64 schwenkbar an der Antriebswelle 60 gelagert, so dass jede Umlenkwalze 57 im Wesentlichen unabhängig von den anderen Umlenkwalzen 57 bezüglich der Antriebswelle 60 verschwenkt werden kann, wie dies in der Fig. 2 durch den Schwenkpfeil B angedeutet ist. Die einer jeden Schwinge 64 zugeordneten Antriebs- und Umlenkwalzen 57, 58 können jeweils die gleiche Gestalt aufweisen und beispielsweise zylindrisch, doppelkonisch (siehe hierzu die linke Darstellung der Fig. 3) oder ballig gedreht sein, um so für einen geraden Lauf des Förderbands 56 zu sorgen.

Wie der Fig. 1 des Weiteren entnommen werden kann, umfasst jede Schwinge 64 eine erste Gabel 66 und eine zweite Gabel 68, wobei jede dieser Gabeln 66, 68 wie die Vorderradgabel eines Fahrrads zwei Arme 70 und einen Gabelschaft 72 umfasst. Der Gabelschaft 72 der zweiten Gabel 68 ist dabei rohrförmig ausgebildet und nimmt den Gabelschaft 72 der ersten Gabel 66 teleskopierbar auf, so dass die Länge der jeweiligen Schwinge 64 und damit die Länge der Förderbandeinheit 50 an unterschiedliche Verhältnisse angepasst werden kann.

Wie wiederum der Fig. 1 entnommen werden kann, sind die freien Enden der Arme 70 der ersten Gabel 66 an der Antriebswelle 60 angelenkt. Insbesondere greifen dabei Arme 70 benachbarter Gabeln 66 in den Abstand zwischen zwei zueinander benachbarten Antriebswalzen 58 ein, wobei zwischen den Armen 70 einer jeden ersten Gabel 66 eine jeweilige Antriebswalze 58 angeordnet ist. In entsprechender Weise ist zwischen den beiden Armen 70 jeder zweiten Gabel 68 jeweils eine Umlenkwalze 57 angeordnet und an den freien Enden der Arme 70 der zweiten Gabel 68 drehbar gelagert. Zwischen den einzelnen Umlenkwalzen 57 besteht jedoch keine wie auch immer geartete starre Verbindung, so dass die einzelnen Schwingen 64 bzw. die von diesen Schwingen 64 getragenen Umlenkwalzen 57 unabhängig voneinander verschwenkt werden können, wie dies in der Fig. 2 durch den Schwenkpfeil B angedeutet ist.

Bei der hier dargestellten Anordnung sind insgesamt vier Walzenpaare 57, 58 nebeneinander angeordnet, wobei in der Fig. 1 der Übersichtlichkeit halber nur die Schwingen 64 der beiden linken Walzenpaare 57, 58 dargestellt sind. Die vier Walzenpaare 57, 58 werden von einem einzigen Förderband 56 umgeben, welches zwischen der Antriebsrolle 54 in Form der vier Antriebswalzen 58 und der Umlenkrolle 55 in Form der vier Umlenkwalzen 57 umläuft, wobei es von den Antriebswalzen 58 angetrieben wird. Die in der Fig. 1 dargestellte Einheit, die sich aus mehreren Schwingen 64 sowie den zugehörigen Walzenpaare 57, 58 und dem umlaufenden Förderband 56 zusammensetzt, wird hier im Kontext auch als Förderbandmodul 51 bezeichnet.

Um das Förderband 56 dauerhaft auf Spannung zu halten, sind die beiden Gabeln 66, 68 einer jeden Schwinge 64 mittels einer Schraubendruckfeder 74 auf Druck gegeneinander vorgespannt, wobei sich die Schraubendruckfeder 74 jeder Schwinge 64 an der Gabelbrücke 73 der jeweiligen Gabel 66, 68 abstützt.

Zwar kann das Förderband 56 aufgrund seiner gummielastischen Eigenschaften unterschiedliche Auslenkungen benachbarter Umlenkwalzen 57 ausgleichen; damit es jedoch in dem Förderband 56 zu keiner Stufenbildung zwischen benachbarten Umlenkwalzen 57 kommen kann, lassen sich die Umlenkwalzen 57 gemäß dem in der Fig. 1 eingezeichneten Doppeldrehpfeil D um eine sich in Richtung der Gabelschäfte 72 erstreckende Achse drehen. Hierzu nimmt bei der hier dargestellten Ausführungsform der Gabelschaft 72 der zweiten Gabel 68 den Gabelschaft 72 der ersten Gabel 66 drehbar auf, wozu beispielsweise der Gabelschaft 72 der zweiten Gabel 68 eine hohlzylindrische Gestalt und der Gabelschaft 72 der ersten Gabel 66 die Gestalt eines Voll- oder Hohlzylinders aufweisen kann. Wird somit eine Umlenkwalze 57 ausgelenkt, so können sich benachbarte Umlenkwalzen 57 dem aufgrund dieser Auslenkung bedingten glockenkurvenförmigen Verlauf des Förderbands 56 quer zur Ernterichtung E anpassen, indem sie sich gemäß dem eingezeichneten Drehpfeils D verdrehen.

Zwar kann auf diese Art und Weise einer Überbeanspruchung des Förderbands 56 entgegengewirkt werden; zur weiteren Schonung des Förderbands 56 ist es bei der hier dargestellten Ausführungsform jedoch zusätzlich vorgesehen, dass zueinander benachbarte Schwingen 64 nur bis zu einer maximalen Auslenkung relativ zueinander verschwenkt werden können, wozu zwischen benachbarten, an der Antriebswelle 60 angelenkten ersten Gabeln 66 jeweils eine Winkelbegrenzung 76 in Form beispielsweise eines Anschlags wirksam ist, der die relative Verschwenkbarkeit zweier zueinander benachbarter Schwingen 64 auf ein Maximalmaß wie beispielsweise ±10 cm begrenzt.

Wie der Fig. 4 entnommen werden kann, können mehrere der zuvor beschriebenen Förderbandmodule 51, die jeweils vier zueinander benachbarte Schwingen 64 und Walzenpaare 57, 58 umfassen, quer zur Ernterichtung E aneinander gereiht und antriebswirksam miteinander gekoppelt werden, um so eine Förderbandeinheit 50 zu bilden, die sich über die gesamte Arbeitsbreite des Schneidwerks 11 erstreckt. Anstelle sich aus mehreren Förderbandmodulen 51 zusammenzusetzen, kann eine erfindungsgemäße Förderbandeinheit 50 jedoch auch nur durch ein einziges Förderbandmodul 51 mit einer größeren Anzahl an zueinander benachbarte Schwingen 64 sowie zugehörigen Walzenpaare 57, 58 gebildet werden.

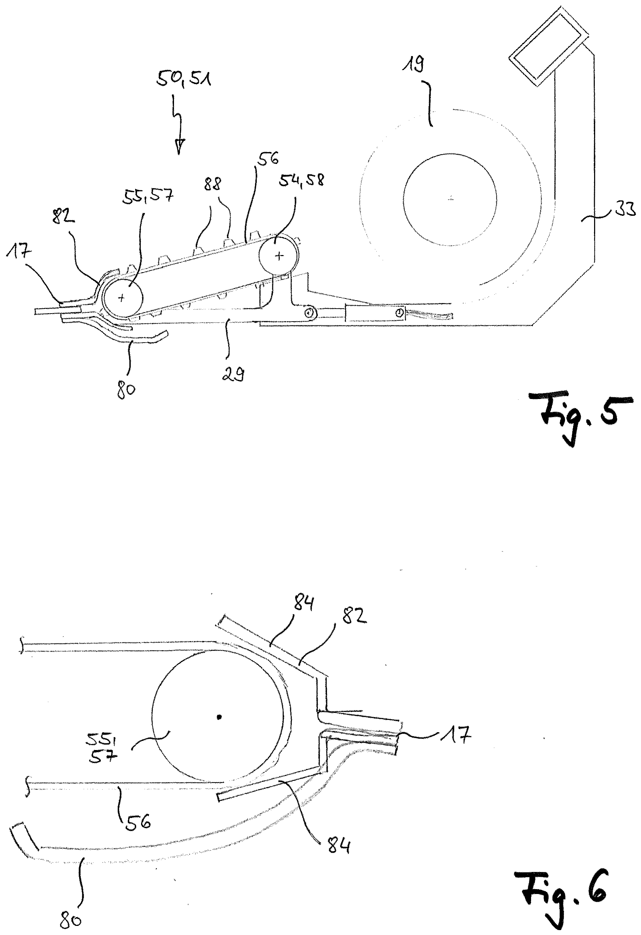

Die Antriebswellen 60 der einzelnen Förderbandmodule 51 sind gemäß Fig. 4 über Klauenkupplungen 78 antriebswirksam miteinander gekoppelt, wodurch ein Gleichlauf der einzelnen Förderbänder 56 sichergestellt werden kann. Die gesamte Förderbandeinheit 50 wird gemäß der Darstellung der Fig. 4 von den quer zur Ernterichtung E zueinander beabstandeten Tragarmen 29 getragen, an deren freien Ende die Schneidmesseranordnung 17 angebracht ist (in der Fig. 4 nicht dargestellt). Die einzelnen Tragarme 29 sind dabei an dem Schneidwerksrahmen 25 angelenkt, so dass sie jeweils um eine sich quer zur Ernterichtung E erstreckende Schwenkachse S verschwenkt werden können. Die Auslenkung der einzelnen Tragarme 29 erfolgt dabei über flexible Tastkufen 80 (siehe hierzu die Fig. 5 und 6), welche an der Unterseite der Schneidmesseranordnung 17 angebracht sind und sich nach hinten bis unter die Förderbandeinheit 50 erstrecken.

Um eine auf diese Art und Weise hervorgerufene Auslenkung der Schneidmesseranordnung 17 in entsprechender Weise auf die Förderbandeinheit 50 und insbesondere auf die Umlenkwalzen 57 übertragen zu können, ist an der Schneidmesseranordnung 17 eine Mitnehmereinrichtung in Form eines elastischen Führungskanals 82 vorgesehen, der die Umlenkrolle 55 bzw. die einzelnen Umlenkwalzen 57 zumindest teilweise aufnimmt. Wird somit die Schneidmesseranordnung 17 in einem Teilbereich ausgelenkt, so wird diese Auslenkung über den Führungskanal 82 in entsprechender Weise auf die Förderbandeinheit 50 übertragen.

Wie letztendlich wiederum der Fig. 4 entnommen werden kann, sind entlang des freien Rands der beiden einander gegenüberliegenden Führungswände 86 des Führungskanals 82 mehrere zueinander beabstandete Aussparungen 86 ausgebildet, wodurch nicht nur die Flexibilität des Führungskanals 82 verbessert, sondern auch für eine Führung des jeweiligen Förderbands 56 gesorgt werden kann, indem an der Oberfläche des Förderbands 56 vorgesehene Förderrippen 88, die quer zur Ernterichtung E voneinander beabstandet sind, durch diese Aussparungen 60 geführt werden, wenn sie in den Führungskanal 82 einlaufen.

### Bezugszeichenliste

- 11: Schneidwerk
- 13: Nutzpflanze, Erntegut
- 15: Haspel
- 17: Schneidmesseranordnung Mähbalken
- 19: Einzugsschnecke
- 21: Einzugsschacht
- 25: Schneidwerksrahmen
- 27: Tragstruktur
- 29: Tragarm
- 30: Förderbandeinheit
- 31: Förderbandmodul
- 33: Schneidwerksrückwand
- 34: Antriebsrolle
- 35: Umlenkrolle
- 36: Förderband
- 50: Förderbandeinheit
- 51: Förderbandmodul
- 54: Antriebsrolle
- 55: Umlenkrolle
- 56: Förderband
- 57: Umlenkwalzen
- 58: Antriebswalzen
- 60: Antriebswelle
- 62: Durchgangsöffnung
- 64: Schwinge
- 66: erste Gabel
- 68: zweite Gabel
- 70: Gabelarme
- 72: Gabelschaft
- 73: Gabelbrücke
- 74: Schraubendruckfeder
- 76: Winkelbegrenzung
- 78: Klauenkupplung
- 80: Tastkufe
- 82: Führungskanal
- 84: Führungswände
- 86: Aussparung
- 88: Förderrippe

- B: Schwenkpfeil
- D: Drehpfeil
- E: Ernterichtung
- F: Förderpfeil
- S: Schwenkachse

## Patentansprüche

1. Schneidwerk (11) für eine Erntemaschine, insbesondere für einen Mähdrescher, mit einer Schneidmesseranordnung (17) zum Mähen eines Ernteguts (13) in einer Ernterichtung (E) und einer Förderbandeinheit (50), die das gemähte Erntegut (13) aufnimmt und von der Schneidmesseranordnung zu einer Fördereinrichtung transportiert, welche das Erntegut (13) weiterfördert, um dieses einer Verarbeitungseinrichtung, insbesondere einem Dreschwerk, zuführen;
wobei die Förderbandeinheit (50) eine Antriebsrolle (54), eine Umlenkrolle (55), die sich in Ernterichtung (E) vor der Antriebsrolle (54) befindet, und ein von der Antriebsrolle (54) angetriebenes Förderband (56) umfasst, das zwischen der Antriebsrolle (54) und der Umlenkrolle (55) umläuft und diese Rollen (54, 55) umgibt;
**dadurch gekennzeichnet,**
**dass** die Umlenkrolle (55) mehrere in axialer Richtung der Umlenkrolle (55) voneinander beabstandete Umlenkwalzen (57) umfasst, die zur Anpassung der Förderbandeinheit (50), insbesondere der Umlenkrolle (55), an Bodenunebenheiten unabhängig voneinander gelagert sind.

2. Schneidwerk nach Anspruch 1,
**dadurch gekennzeichnet,**
**dass** einer jeden Umlenkwalze (57) eine jeweilige Schwinge (64) zugeordnet ist, die an einer die Antriebsrolle (54) antreibenden Antriebwelle (60) beweglich, insbesondere schwenkbar, gelagert ist, wobei jede Umlenkwalze (57) mittels der ihr zugeordneten Schwinge (64) schwenkbar an der Antriebwelle (60) gelagert ist.

3. Schneidwerk nach Anspruch 2,
**dadurch gekennzeichnet,**
**dass** jede Schwinge (64) längenveränderlich ausgebildet ist, wobei es insbesondere vorgesehen ist, dass jede Schwinge (64) einen teleskopierbaren Abschnitt umfasst, der eine Längenänderung der Schwinge (64) ermöglicht.

4. Schneidwerk nach Anspruch 2 oder 3,
**dadurch gekennzeichnet,**
**dass** jede Schwinge (64) zwei Gabeln (66, 68) mit jeweils einem Gabelschaft (72) und zwei Armen (70) umfasst, wobei der Gabelschaft (72) der einen Gabel (66) den Gabelschaft (72) der anderen Gabel (68) teleskopierbar aufnimmt oder umgekehrt, und wobei die freien Enden der Arme (70) der einen Gabel (66) an der Antriebwelle (60) angelenkt sind und zwischen den Armen (70) der anderen Gabel (68) jeweils eine Umlenkwalze (57) angeordnet ist, die an den Armen (70) der anderen Gabel (68) drehbar gelagert ist.

5. Schneidwerk nach Anspruch 4,
**dadurch gekennzeichnet,**
**dass** die Antriebsrolle (54) mehrere in axialer Richtung der Antriebsrolle (54) voneinander beabstandete Antriebswalzen (58) umfasst, wobei zwischen den Armen (70) der einen Gabel (66) jeder Schwinge (64) jeweils eine Antriebswalze (58) angeordnet ist.

6. Schneidwerk nach Anspruch 4 oder 5,
**dadurch gekennzeichnet,**
**dass** der Gabelschaft (72) der einen Gabel (66) den Gabelschaft (72) der anderen Gabel (68) drehbar aufnimmt oder umgekehrt.

7. Schneidwerk nach zumindest einem der Ansprüche 2 bis 6,
**dadurch gekennzeichnet,**
**dass** die beiden Gabeln (66, 68) jeder Schwinge (64) auf Druck gegeneinander vorgespannt sind, wobei es insbesondere vorgesehen ist, dass eine jede Schwinge (64) eine die Gabelschäfte (72) der Gabeln (66, 68) umgebende Schraubendruckfeder (74) umfasst, die sich an der Gabelbrücke (73) der jeweiligen Gabel (66, 68) abstützt.

8. Schneidwerk nach zumindest einem der Ansprüche 2 bis 7,
**dadurch gekennzeichnet,**
**dass** eine Winkelbegrenzung (76) vorgesehen ist, die die maximale Auslenkung einer Schwinge (64) gegenüber einer benachbarten Schwinge (64) begrenzt, wobei es insbesondere vorgesehen ist, dass die Winkelbegrenzung (76) zwischen benachbarten Armen (70) benachbarter Gabeln (66) wirksam ist, die an der Antriebwelle (60) angelenkt sind.

9. Schneidwerk nach zumindest einem der Ansprüche 2 bis 8,
**dadurch gekennzeichnet,**
**dass** das Förderband (56) den Abstand zwischen benachbarten Umlenkwalzen (57) überbrückt.

10. Schneidwerk nach zumindest einem der vorstehenden der Ansprüche,
**dadurch gekennzeichnet,**
**dass** an der Schneidmesseranordnung (17) eine Mitnehmereinrichtung (82) vorgesehen ist, die eine Auslenkung der Schneidmesseranordnung auf die Umlenkrolle (55) der Förderbandeinheit (50) überträgt, wobei es insbesondere vorgesehen ist, dass die Mitnehmereinrichtung (82) einen elastischen Führungskanal (82) aufweist, der die Umlenkrolle (55) aufnimmt.

11. Schneidwerk nach Anspruch 10,
**dadurch gekennzeichnet,**
**dass** der Führungskanal (82) zwei Führungswände (84) aufweist, zwischen denen sich die Umlenkrolle (55) befindet, wobei entlang eines freien Rands der jeweiligen Führungswand (84) mehrere voneinander beabstandete Aussparungen (86) in der jeweiligen Führungswand (84) ausgebildet sind.
